# EUROPÄISCHE PATENTANMELDUNG

(11) **EP 4 707 041 A1**
(43) Veröffentlichungstag der Anmeldung: **11.03.2026**
(21) Anmeldenummer: 25000086.6
(22) Anmeldetag: 20.08.2025
(51) Int. Cl.: B60L 50/75, B60L 58/40, H01M 16/00, B60L 58/31

(54) **VERFAHREN UND STEUEREINRICHTUNG ZUM BETREIBEN EINES HYBRIDFAHRZEUGS, HYBRIDFAHRZEUG UND GEOGRAPHISCHE EINHEIT**

(30) Priorität: 30.08.2024 DE 102024002804
(71) Anmelder: GLOBE Fuel Cell Systems GmbH, 70567 Stuttgart (DE)
(72) Erfinder: Wienk-Borgert, Bernhard, 73732 Esslingen am Neckar (DE); Kunberger, Jan-Mark, 80995 München (DE)

(57) **Zusammenfassung**

Die Erfindung betrifft ein Verfahren (15) zum Betreiben eines Hybridfahrzeugs (1), wobei das Hybridfahrzeug (1) ein Brennstoffzellensystem (2), eine Traktionsbatterie (3), einen Traktionsantrieb (4) und eine Fahrzeugsteuerung (7) aufweist, die zum Betreiben des Hybridfahrzeugs (1) in einem Brennstoffzellenmodus, in dem das Brennstoffzellensystem (2) aktiviert ist, und in einem Batteriemodus konfiguriert ist, in dem das Brennstoffzellensystem (2) deaktiviert ist. Das Hybridfahrzeug (1) ist zum Betreiben in einem vorbestimmten Einsatzgebiet (11) konfiguriert ist, das in mehrere Zonen (12) unterteilt ist, die wenigstens eine Freizone (14), in der das Hybridfahrzeug (1) im Brennstoffzellenmodus betreibbar ist, und wenigstens eine Sperrzone (13) aufweisen, in der ein Betreiben des Hybridfahrzeugs (1) im Brennstoffzellenmodus unzulässig ist. Beim Verfahren wird ermittelt, wo sich das Hybridfahrzeug (1) innerhalb des Einsatzgebiets (11) befindet und/oder ob sich das Hybridfahrzeug (1) aktuell in der jeweiligen Freizone (14) oder in der jeweiligen Sperrzone (13) befindet, wobei das Hybridfahrzeug (1), wenn es sich in der jeweiligen Freizone (14) befindet, im Brennstoffzellenmodus betrieben wird, und, wenn es sich in der jeweiligen Sperrzone (13) befindet, im Batteriemodus betrieben wird.

## Beschreibung

Die vorliegende Erfindung betrifft ein Verfahren zum Betreiben eines Hybridfahrzeugs. Die Erfindung betrifft auch eine Steuereinrichtung zum Betreiben eines Hybridfahrzeugs. Ferner betrifft die Erfindung ein Hybridfahrzeug sowie eine geographische Einheit.

Aus der WO 2023 / 237 342 A1 ist ein Hybridfahrzeug bekannt, das ein Brennstoffzellensystem zum Erzeugen elektrischer Energie, eine Traktionsbatterie zum Speichern elektrischer Energie und einen elektromotorischen Traktionsantrieb zum Antreiben des Hybridfahrzeugs aufweist. Ein derartiges Hybridfahrzeug kann mit einer Fahrzeugsteuerung ausgestattet sein, die zum Betreiben des Hybridfahrzeugs in einen Brennstoffzellenmodus, in dem das Brennstoffzellensystem aktiviert ist und elektrische Energie zum Versorgen des Traktionsantriebs und/oder zum Versorgen der Traktionsbatterie erzeugt, und in einen Batteriemodus konfiguriert ist, in dem das Brennstoffzellensystem deaktiviert ist und der Traktionsantrieb nur von der Traktionsbatterie mit elektrischer Energie versorgt wird.

Problematisch bei Kraftfahrzeugen mit einem Brennstoffzellensystem ist der Umstand, dass als Anodengas in der Regel Wasserstoff verwendet wird, der mit Sauerstoff ein explosives Gemisch bilden kann. Im Abgas eines Brennstoffzellensystems kann Wasserstoff enthalten sein, der ab einer kritischen Konzentration in Umgebungsluft ein explosives Gemisch bildet. Insbesondere in geschlossenen Räumen, beispielsweise in Fabrikgebäuden oder Hallen, kann ein längerer Betrieb eines Fahrzeugs mit Brennstoffzellensystem zu einer unerwünscht hohen Konzentration des Wasserstoffs in der Luft führen. Außerdem enthält das Abgas eines Brennstoffzellensystems relativ viel dampfförmiges Wasser. Auch hier kann in bestimmten geschlossenen Räumen ein erhöhter Wasseranteil in der Luft unerwünscht sein, beispielsweise in Kühlräumen, insbesondere zum Lagern von Lebensmitteln, oder in Lagerhallen zum Lagern von feuchtigkeitsempfindlichen Waren, wie z.B. Papierwaren, Stoffe und Bekleidung. Wasserdampf kann in einer solchem Umgebung generell unerwünscht sein. Ferner kann der in die Luft eingebrachte Wasserdampf an Oberflächen auch an der Ware kondensieren, was ebenfalls unerwünscht ist. Je nach Temperatur im Kühlraum kann das kondensierte Wasser auch gefrieren, was ebenfalls unerwünscht ist und eine Gefahr darstellen kann.

In einer Fabrik können im Freien und in Gebäuden, wie zum Beispiel ein Hochregallager oder einer Produktionshalle, sogenannte Intralogistikfahrzeuge zum Einsatz kommen, wie zum Beispiel Flurförderfahrzeuge oder Gabelstapler. Diese Intralogistikfahrzeuge können dabei als Hybridfahrzeuge konfiguriert sein. In den Gebäuden, in denen die Intralogistikfahrzeuge zum Einsatz kommen, können Bereiche vorhanden sein, in denen der Betrieb eines Brennstoffzellensystems unerwünscht bzw. nicht erlaubt ist. Beispielsweise können diese Bereiche schlecht belüftet sein, sodass sich Wasserstoff und/oder Wasser anreichern kann. Ebenso ist denkbar, dass in diesen Bereichen offenes Feuer oder Funken möglich sind. Beispielsweise können in einer Fabrikationshalle Schweißvorgänge durchgeführt werden. Ferner sind Kühlhallen denkbar, in denen feuchtigkeitsempfindliche Waren, insbesondere Lebensmittel, gelagert werden. Hierdurch ist der Einsatz von Intralogistikfahrzeugen mit Brennstoffzellensystem beschränkt.

Eine Fabrik repräsentiert eine geographische Einheit mit einem geographischen Gelände, das dem Werksgelände der Fabrik entspricht. Andere geographische Einheiten, bei denen hybride Fahrzeuge zum Einsatz kommen können, sind z.B. ein Flughafen, der ein Flughafengelände und hybride Flughafen-Logistikfahrzeuge aufweist, und eine Baustelle, die ein Baustellengelände und hybride Baumaschinen aufweist.

Aus der CN 2 16 713 993 U, aus der CN 1 13 175 247 A, aus der
CN 2 18 228 944 U und aus der JP 2005 - 353 346 A sind Werkstatthallen bekannt, die mit einer Be- und Entlüftungsanlage ausgestattet sind, um in der Werkstatthalle eine unerwünscht hohe Konzentration an Wasserstoff zu vermeiden.

Die vorliegende Erfindung beschäftigt sich mit dem Problem, für Hybridfahrzeuge mit einem Brennstoffzellensystem, einer Traktionsbatterie und einem Traktionsantrieb einen Weg aufzuzeigen, der die Betriebssicherheit der Hybridfahrzeuge erhöht, insbesondere im Hinblick auf den Einsatz derartiger Hybridfahrzeuge auf einem geographischen Gelände einer geographischen Einheit und insbesondere im Hinblick auf Intralogistikfahrzeuge.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein geographisches Einsatzgebiet, in dem das Hybridfahrzeug verwendet werden soll, geographisch in mehrere Zonen zu unterteilen, die wenigstens eine Freizone, in der das Hybridfahrzeug im Brennstoffzellenmodus betreibbar ist, und wenigstens eine Sperrzone aufweisen, in der ein Betreiben des Hybridfahrzeugs im Brennstoffzellenmodus unzulässig ist. Des Weiteren wird vorgeschlagen, die Position des Hybridfahrzeugs innerhalb des Einsatzgebiets zu überwachen und das Hybridfahrzeug so zu steuern, dass es im Brennstoffzellenmodus betrieben wird, wenn es sich in einer der wenigstens einen Freizone befindet, und im Batteriemodus betrieben wird, wenn es sich in einer der wenigstens einen Sperrzone befindet. Das Umschalten zwischen Brennstoffzellenmodus und Batteriemodus kann dabei automatisch durchgeführt werden, sodass beim Fahren des Hybridfahrzeugs im Einsatzgebiet beim Überfahren einer Grenze zwischen einer der wenigstens einen Freizone und einer der wenigstens einen Sperrzone der entsprechende Wechsel zwischen den Betriebsmodi automatisch stattfindet, ohne dass hierzu ein manueller Eingriff durch einen Fahrer (männlich/weiblich/divers) erforderlich ist. Der Fahrer muss dabei insbesondere nicht darauf achten, ob er in einer der wenigstens einen Sperrzone oder in einer der wenigstens einen Freizone fährt oder ober er eine Grenze zwischen einer der wenigstens einen Freizone und einer der wenigstens einen Sperrzone überfährt, da diese Überwachung automatisch durchgeführt wird. Des Weiteren eignet sich diese Automatisierung in besonderer Weise auch für Hybridfahrzeuge, die für ein autonomes Fahren konfiguriert sind und insbesondere ohne Fahrer auskommen.

Die vorstehend mit Bezug auf die jeweilige Freizone verwendete Formulierung "eine der wenigstens einen Freizone" ist gleichbedeutend mit der nachfolgend verwendeten Formulierung "die jeweilige Freizone" und entspricht für den Fall, dass nur eine einzige Freizone vorhanden ist, der Formulierung "die Freizone" und entspricht für den Fall, dass mehrere Freizonen vorhanden sind, der Formulierung "eine der Freizonen". Entsprechendes gilt dann auch für die jeweilige Sperrzone.

Im vorliegenden Zusammenhang ist eine "Konfiguration" gleichbedeutend mit einer "Ausgestaltung" und/oder "Einrichtung" und/oder "Programmierung", sodass die Formulierung "so konfiguriert, dass" gleichbedeutend ist mit der Formulierung "so ausgestaltet und/oder eingerichtet und/oder programmiert, dass".

Das erfindungsgemäße Verfahren zum Betreiben eines Hybridfahrzeugs geht von einem Hybridfahrzeug aus, das ein Brennstoffzellensystem zum Erzeugen elektrischer Energie, eine Traktionsbatterie zum Speichern elektrische Energie, einen elektromotorischen Traktionsantrieb zum Antreiben des Hybridfahrzeugs und eine Fahrzeugsteuerung aufweist, wobei die Fahrzeugsteuerung zum Betreiben des Hybridfahrzeugs in einem Brennstoffzellenmodus, und in einen Batteriemodus konfiguriert ist, wobei im Brennstoffzellenmodus das Brennstoffzellensystem aktiviert ist und elektrische Energie zum Versorgen des Traktionsantriebs und/oder zum Versorgen der Traktionsbatterie erzeugt, während im Batteriemodus das Brennstoffzellensystem deaktiviert ist und der Traktionsantrieb von der Traktionsbatterie mit elektrischer Energie versorgt wird. Des Weiteren geht das hier vorgestellte Verfahren zum Betreiben eines Hybridfahrzeugs davon aus, dass das Hybridfahrzeug zum Betreiben in einem vorbestimmten geographischen Einsatzgebiet konfiguriert ist, wobei das Einsatzgebiet geographisch in mehrere Zonen unterteilt ist, die wenigstens eine Freizone, also eine oder mehrere Freizonen aufweisen, wobei in der jeweiligen Freizone das Hybridfahrzeug im Brennstoffzellenmodus betreibbar ist, und wenigstens eine Sperrzone, also eine oder mehrere Sperrzonen aufweisen, wobei in der jeweiligen Sperrzone ein Betreiben des Hybridfahrzeugs im Brennstoffzellenmodus unzulässig ist. Gemäß dem erfindungsgemäßen Verfahren wird nun ermittelt, wo sich das Hybridfahrzeug innerhalb des Einsatzgebiets befindet, und/oder ob sich das Hybridfahrzeug aktuell in einer solchen Freizone oder in einer solchen Sperrzone befindet. Des Weiteren wird das Hybridfahrzeug, wenn es sich in einer solchen Freizone befindet, im Brennstoffzellenmodus betrieben, und, wenn es sich in einer solchen Sperrzone befindet, im Batteriemodus betrieben. Durch diese Vorgehensweise lässt sich das Hybridfahrzeug auch in der jeweiligen Sperrzone bewegen, da bei deaktiviertem Brennstoffzellensystem die Emission von Wasserstoff und/oder Wasser im Abgas des Brennstoffzellensystems vermieden werden kann.

Das Aktivieren und Deaktivieren des Brennstoffzellensystems entspricht im einfachsten Fall einem Einschalten und Ausschalten des Brennstoffzellensystems. Das eingeschaltete Brennstoffzellensystem erzeugte elektrische Energie. Das ausgeschaltete Brennstoffzellensystem erzeugt keine wasserstoffhaltigen Abgase. Das Einschalten oder Aktivieren oder Hochfahren des Brennstoffzellensystems benötigt eine Einschaltzeit, die von den Temperaturen der einzelnen Komponenten des Brennstoffzellensystems abhängt. Während eines Nennbetriebszustands besitzen alle Komponenten des Brennstoffzellensystems ihre jeweilige Betriebstemperatur. Bei einem Kaltstart des Brennstoffzellensystems, bei dem alle Komponenten des Brennstoffzellensystems Umgebungstemperatur besitzen, ist die Einschaltzeit vergleichsweise groß. Wird das Brennstoffzellensystem dagegen nur vorübergehend ausgeschaltet, liegt beim erneuten Einschalten des Brennstoffzellensystems regelmäßig ein Warmstart vor, bei dem die Komponenten des Brennstoffzellensystems eine Temperatur zwischen der jeweiligen Betriebstemperatur und der Umgebungstemperatur aufweisen. In der Folge ist die Startzeit bei einem derartigen Warmstart vergleichsweise kurz.

Entsprechend einer vorteilhaften Ausführungsform kann das Brennstoffzellensystem einen Brennstoffzellenstapel und eine Anodengaszuführung zum Versorgen des Brennstoffzellenstapels mit Anodengas aufweisen. Beim Anodengas handelt es sich vorzugsweise um Wasserstoff. Zum Deaktivieren des Brennstoffzellensystems kann nun die Anodengaszuführung ausgeschaltet werden. Hierdurch ergibt sich für das deaktivierte Brennstoffzellensystem ein Bereitschaftszustand, der sich einerseits von einem ausgeschalteten Zustand des Brennstoffzellensystems unterscheidet und der sich andererseits rasch wieder in einen elektrische Energie produzierenden, aktivierten Zustand bringen lässt. Zum Aktivieren des Brennstoffzellensystems wird die Anodengaszuführung eingeschaltet. Dementsprechend kann relativ einfach durch Einschalten und Ausschalten der Anodengaszuführung das Brennstoffzellensystem aktiviert und deaktiviert werden und zwischen dem Brennstoffzellenmodus und dem Batteriemodus gewechselt werden. Für dieses vergleichsweise rasch durchführbare Aktivieren und Deaktivieren des Brennstoffzellensystems wird davon ausgegangen, dass das zu Beginn kalte Brennstoffzellensystem schon einmal in der üblichen Weise mittels einer entsprechenden Kaltstartprozedur aus einem Kaltzustand hochgefahren worden ist. Beim vorübergehenden Deaktivieren und späteren Aktivieren befindet sich das Brennstoffzellensystem dann noch in einem Warmzustand, in dem eine zeitlich stark verkürzte Warmstartprozedur zum Aktivieren durchführbar ist.

Entsprechend einer besonders vorteilhaften Ausführungsform kann vorgesehen sein, dass eine Trajektorie, also eine Bewegungsbahn des Hybridfahrzeugs ermittelt wird, entlang der sich das Hybridfahrzeug im Einsatzgebiet bewegt. Anhand der Trajektorie lässt sich dann voraussagen, ob sich das Hybridfahrzeug entlang der Trajektorie einer Grenze zwischen einer der wenigstens einen Freizone und einer der wenigstens einen Sperrzone nähert und wann das Hybridfahrzeug diese Grenze erreichen wird. Besonders zweckmäßig ist nun eine Konfiguration, bei der zeitlich vor dem Erreichen der Grenze eine Umschaltprozedur zum Umschalten vom Brennstoffzellenmodus in den Batteriemodus initiiert wird, wenn sich das Hybridfahrzeug in einer der wenigstens einen Freizone befindet und einer der wenigstens einen Sperrzone nähert, derart, dass die Umschaltprozedur vor oder bei Erreichen der Grenze abgeschlossen ist. Auf diese Weise ist sichergestellt, dass das Hybridfahrzeug ohne Pause und ohne Fahrtunterbrechung von einer der wenigstens einen Freizone in eine der wenigstens einen Sperrzone fahren kann, da automatisch rechtzeitig in den Batteriemodus gewechselt wird. Die Voraussage, wann das Hybridfahrzeug eine Grenze erreicht, entspricht einer Berechnung anhand der aktuellen Fahrzeuggeschwindigkeit und des aktuellen Abstands zur Grenze. Insbesondere bei autonom fahrenden Hybridfahrzeugen lässt sich die Zeit bis zum Erreichen der Grenze sehr genau voraussagen bzw. berechnen, während bei Hybridfahrzeugen mit Fahrer jederzeit ein unerwarteter Eingriff des Fahrers erfolgen kann, der die Geschwindigkeit und/oder Richtung des Hybridfahrzeugs beeinflusst. Des Weiteren kann die Bewegung des Hybridfahrzeugs im Werksgelände beobachtet werden und im Hinblick auf Bewegungsmuster ausgewertet werden. Insbesondere kann dadurch ein Bewegungsmodell für das Hybridfahrzeug im Werksgelände ermittelt werden. Damit lassen sich ebenfalls Vorhersagen über die Zeit bis zum Erreichen einer Grenze machen.

Optional kann vorgesehen sein, dass für den Zeitpunkt des Umschaltens auch der aktuelle Ladezustand der Traktionsbatterie berücksichtigt wird.

Gemäß einer vorteilhaften Ausführungsform kann beispielsweise vorgesehen sein, dass zeitlich vor dem Erreichen der Grenze ein Energiebedarf des Traktionsantriebs für einen erwarteten Betrieb des Hybridfahrzeugs in der Sperrzone vorausgesagt und mit einem aktuellen Ladezustand der Traktionsbatterie verglichen wird. Zeitlich vor dem Initiieren der Umschaltprozedur kann nun ein Ladevorgang der Traktionsbatterie durchgeführt werden, falls der geschätzte Energiebedarf größer ist als der aktuelle Ladezustand. Im Hinblick auf das erlernte Bewegungsmodell kann vorausgesagt werden, welchen Energiebedarf das Hybridfahrzeug voraussichtlich in der jeweiligen Sperrzone haben wird. Durch Vergleichen mit dem aktuellen Ladezustand lässt sich ermitteln, ob die gespeicherte Energie dafür ausreicht oder nicht. Ist der aktuelle Ladezustand ausreichend hoch, braucht nichts weiter unternommen werden. Reicht der aktuelle Ladezustand voraussichtlich jedoch nicht aus, wird die Leistung des Brennstoffzellensystems vorübergehend erhöht, um die Traktionsbatterie zu laden, um rechtzeitig einen ausreichend hohen Ladezustand erzielen zu können.

Des Weiteren kann grundsätzlich vorgesehen sein, dass das Hybridfahrzeug das Einfahren in die jeweilige Sperrzone verweigert, wenn der aktuelle Ladezustand der Traktionsbatterie voraussichtlich nicht ausreicht, den in der jeweiligen Sperrzone erwarteten Energiebedarf zu decken. Außerdem kann optional vorgesehen sein, dass bei einem Hybridfahrzeug mit Fahrer innerhalb der jeweiligen Sperrzone dem Fahrer auf geeignete Weise mitgeteilt wird, dass er unverzüglich die jeweilige Sperrzone zu verlassen hat, wenn der Ladezustand der Traktionsbatterie einen vorbestimmten Grenzwert unterschreitet. Bei einem autonom fahrenden Hybridfahrzeug wird das Hybridfahrzeug automatisch aus der jeweiligen Sperrzone herausgefahren, wenn der Ladezustand der Traktionsbatterie den vorbestimmten Grenzwert unterschreitet.

Gemäß einer vorteilhaften Ausführungsform kann vorgesehen sein, dass zeitlich vor dem Erreichen der Grenze eine Umschaltprozedur zum Umschalten vom Batteriemodus in den Brennstoffzellenmodus initiiert wird, wenn sich das Hybridfahrzeug in der jeweiligen Sperrzone befindet und der jeweiligen Freizone nähert, derart, dass die Umschaltprozedur nach oder bei Erreichen der Grenze abgeschlossen ist. Auch diese Maßnahme ermöglicht ein unterbrechungsfreies Überfahren einer derartigen Grenze wobei hier außerdem sichergestellt wird, dass nicht zu früh, als noch innerhalb einer Sperrzone in den Brennstoffzellenmodus gewechselt wird.

Gemäß einer vorteilhaften Ausführungsform kann das Ermitteln, wo sich das Hybridfahrzeug innerhalb des Einsatzgebiets befindet und/oder ob sich das Hybridfahrzeug aktuell in der jeweiligen Freizone oder in der jeweiligen Sperrzone befindet, und/oder das Ermitteln einer Trajektorie des Hybridfahrzeugs, entlang der sich das Hybridfahrzeug im Einsatzgebiet bewegt, dadurch erfolgen, dass ein geographischer Ort des Hybridfahrzeugs ermittelt und mit geographischen Daten des Einsatzgebiets verglichen wird. Der geographische Ort des Hybridfahrzeugs kann insbesondere durch Längengrade und Breitengrade definiert werden. Ebenso können die geographischen Daten des Einsatzgebiets Breitengrade und Längengrade repräsentieren. Hierdurch wird die Standortbestimmung erheblich vereinfacht.

Insbesondere kann das Ermitteln des geographischen Orts des Hybridfahrzeugs mittels einer satellitengestützten Navigationseinrichtung durchgeführt werden. Derartige satellitengestützte Navigationseinrichtungen kommen bei Navigationseinrichtungen zum Einsatz, mit denen moderne Kraftfahrzeuge standardmäßig ausgestattet sind.

Das Vergleichen des ermittelten geographischen Orts des Hybridfahrzeugs mit den geographischen Daten des Einsatzgebiets kann dabei zweckmäßig anhand einer das Einsatzgebiet repräsentieren geographischen Karte durchgeführt werden. Die geographische Karte kann dabei im Hybridfahrzeug, zum Beispiel in einer Steuereinrichtung, gespeichert sein oder von einem Backendserver bereitgestellt werden und von dem Backendserver abrufbar sein.

Entsprechend einer vorteilhaften Ausführungsform kann vorgesehen sein, dass die Zonen des Einsatzgebiets mindestens eine variable Zone aufweisen, die in Abhängigkeit von variierenden Zonenparametern eine der wenigstens einen Sperrzone oder eine der wenigstens einen Freizone bilden kann. Diese Zonenparameter der jeweiligen variablen Zone können überwacht werden und die jeweilige variable Zone kann dynamisch in Abhängigkeit der aktuellen Zonenparameter als Freizone oder als Sperrzone eingestuft werden. Beim Ermitteln, ob sich das Hybridfahrzeug aktuell in der jeweiligen Freizone oder in der jeweiligen Sperrzone befindet, kann nun die jeweilige variable Zone und deren aktuelle Einstufung als Freizone oder Sperrzone entsprechend berücksichtigt werden. Bestimmte Zonenparameter, wie z.B. aktuelle Luftfeuchtigkeit, Temperatur, Luftdruck, können variieren und können je nach Konstellation eine Umgebung bilden, die im Brennstoffzellenmodus befahrbar ist oder eben nicht. Durch dynamische Anpassung derartiger variabler Zonen können die Sicherheit im Einsatzgebiet und/oder die Nutzbarkeit des Hybridfahrzeugs erheblich verbessert werden. Beispielsweise kann eine variable Zone aufgrund von Sonneneinstrahlung eine Temperatur erreichen, die für den Brennstoffzellenmodus unerwünscht hoch ist, so dass die variable Zone vorübergehend zur Sperrzone wird und nur im Batteriemodus befahren werden kann. Fällt die Temperatur in der variablen Zone wieder unter einen vorbestimmten Grenzwert, kann die variable Zone wieder als Freizone eingestuft werden und lässt sich auch im Brennstoffzellenmodus befahren.

Gemäß einer vorteilhaften Ausführungsform kann vorgesehen sein, dass das Ermitteln, wo sich das Hybridfahrzeug innerhalb des Einsatzgebiets befindet und/oder ob sich das Hybridfahrzeug aktuell in der jeweiligen Freizone oder in der jeweiligen Sperrzone befindet, und/oder das Ermitteln einer Trajektorie des Hybridfahrzeugs, entlang der sich das Hybridfahrzeug im Einsatzgebiet bewegt, dadurch erfolgt, dass im Einsatzgebiet mehrere Markierungsstationen angeordnet sind, die jeweils zum Senden eines Standortsignals konfiguriert sind, das mit einem Standort, an dem sich die jeweilige Markierungsstation innerhalb des Einsatzgebiets befindet, und/oder mit einer Standortinformation korreliert, ob sich der Standort in der jeweiligen Freizone oder in der jeweiligen Sperrzone oder auf einer Grenze zwischen der jeweiligen Sperrzone und der jeweiligen Freizone befindet. Diese Standortsignale können dann empfangen und ausgewertet werden. Die Verwendung derartiger Markierungsstationen kann dabei zusätzlich zu der vorstehend genannten Navigationseinrichtung oder alternativ dazu zum Einsatz kommen. Insbesondere innerhalb von Gebäuden kann der Einsatz einer satellitengestützten Navigationseinrichtung beschränkt sein. In diesem Fall können derartige Markierungsstationen die Ortung des Hybridfahrzeugs erheblich verbessern.

Zweckmäßig können derartige Markierungsstationen insbesondere im Bereich von Grenzen zwischen Freizonen und Sperrzonen angeordnet sein, sodass sich eine Annäherung an eine solche Grenze einfach detektieren lässt.

Gemäß einer vorteilhaften Ausführungsform kann das Hybridfahrzeug als Intralogistikfahrzeug konfiguriert sein. Ein derartiges Intralogistikfahrzeug ist insbesondere ein Flurförderfahrzeug oder ein Gabelstapler. Des Weiteren kann das Einsatzgebiet durch ein Werksgelände einer Fabrik gebildet sein. Im vorliegenden Zusammenhang wird unter einer Fabrik eine Produktionsstätte im industriellen Maßstab verstanden. Die Zonen können dabei durch Gebäude auf dem Werksgelände und/oder durch Gebäudeabschnitte von Gebäuden auf dem Werksgelände und/oder durch Freiflächen des Werksgeländes, also durch Bereiche zwischen benachbarten Gebäuden, und/oder durch Freiflächenabschnitte von Freiflächen des Werksgeländes gebildet sein. Die Gebäude können zum Beispiel Produktionshallen oder Lagerhallen sein. Die Freiflächen können Straßen und/oder Wege aufweisen, die von den Intralogistikfahrzeugen genutzt werden können.

Gemäß einer alternativen Ausführungsform kann das Hybridfahrzeug als Flughafen-Logistikfahrzeug konfiguriert sein. Derartige Flughafen-Logistikfahrzeuge werden auch als *Ground Support Equipment* bezeichnet. Das Einsatzgebiet ist dann durch ein Flughafengelände eines Flughafens gebildet, wobei die Zonendurch Gebäude auf dem Flughafengelände und/oder durch Gebäudeabschnitte von Gebäuden auf dem Flughafengelände und/oder durch Freiflächen des Flughafengeländes und/oder durch Freiflächenabschnitte von Freiflächen des Flughafengeländes gebildet sind.

Gemäß einer weiteren alternativen Ausführungsform kann das Hybridfahrzeug als Baumaschine konfiguriert sein. Das Einsatzgebiet ist dann durch ein Baustellengelände einer Baustelle gebildet, wobei die Zonen durch Gebäude auf dem Baustellengelände und/oder durch Gebäudeabschnitte von Gebäuden auf dem Baustellengelände und/oder durch Freiflächen des Baustellengeländes und/oder durch Freiflächenabschnitte von Freiflächen des Baustellengeländes gebildet sind.

Eine erfindungsgemäße Steuereinrichtung zum Betreiben eines Hybridfahrzeugs ist zum Koppeln mit der Fahrzeugsteuerung des Hybridfahrzeugs konfiguriert und ist außerdem zum Durchführen des Verfahrens der vorstehend beschriebenen Art konfiguriert.

Gemäß einer vorteilhaften Ausführungsform kann die Steuereinrichtung eine Empfangseinheit aufweisen oder mit einer Empfangseinheit koppelbar oder gekoppelt sein, wobei die Empfangseinheit zum Empfangen von Standortsignalen konfiguriert ist, die von im Einsatzgebiet verteilt angeordneten Markierungsstationen stammen und mit einem Standort, an dem sich die jeweilige Markierungsstation innerhalb des Einsatzgebiets befindet, und/oder mit einer Standortinformation, ob sich der Standort in einer Freizone oder in einer Sperrzone und/oder auf einer Grenze zwischen einer Sperrzone und einer Freizone befindet, korrelieren. Die Steuereinrichtung kann außerdem so konfiguriert sein, dass sie durch Auswerten der Standortsignale ermittelt, wo sich das Hybridfahrzeug innerhalb des Einsatzgebiets befindet, und/oder ob sich das Hybridfahrzeug aktuell in der jeweiligen Freizone oder in der jeweiligen Sperrzone befindet, und/oder eine Trajektorie des Hybridfahrzeugs ermittelt, entlang der sich das Hybridfahrzeug im Einsatzgebiet bewegt.

Zusätzlich oder alternativ dazu kann die Steuereinrichtung eine satellitengestützte Navigationseinrichtung aufweisen oder mit einer satellitengestützten Navigationseinheit gekoppelt sein, die zum Ermitteln des geographischen Orts des Hybridfahrzeugs konfiguriert ist.

Ein erfindungsgemäßes Hybridfahrzeug umfasst ein Brennstoffzellensystem zum Erzeugen elektrischer Energie, eine Traktionsbatterie zum Speichern elektrischer Energie, einen elektromotorischen Traktionsantrieb zum Antreiben des Hybridfahrzeugs und eine Fahrzeugsteuerung, die zum Betreiben des Hybridfahrzeugs in einem Brennstoffzellenmodus, in dem das Brennstoffzellensystem aktiviert ist und elektrische Energie zum Versorgen des Traktionsantriebs und/oder zum Versorgen der Traktionsbatterie erzeugt, und in einem Batteriemodus konfiguriert ist, in dem das Brennstoffzellensystem deaktiviert ist und der Traktionsantrieb nur von der Traktionsbatterie mit elektrischer Energie versorgt wird. Das Hybridfahrzeug ist zum Betreiben in einem vorbestimmten geographischen Einsatzgebiet konfiguriert, wobei das Einsatzgebiet geographisch in mehrere Zonen unterteilt ist, die wenigstens eine Freizone, in der das Hybridfahrzeug im Brennstoffzellenmodus betreibbar ist, und wenigstens eine Sperrzone aufweisen, in der ein Betreiben des Hybridfahrzeugs im Brennstoffzellenmodus unzulässig ist. Das erfindungsgemäße Hybridfahrzeug ist außerdem mit einer Steuereinrichtung der vorstehend beschriebenen Art ausgestattet, die mit der Fahrzeugsteuerung gekoppelt ist.

Die Steuereinrichtung und die Fahrzeugsteuerung können in separaten Steuereinheiten verwirklicht sein. Ebenso ist denkbar, dass die Steuereinrichtung zumindest teilweise in die Fahrzeugsteuerung hardwaremäßig integriert und/oder softwaremäßig implementiert ist.

Gemäß einer vorteilhaften Ausführungsform kann das Hybridfahrzeug als Intralogistikfahrzeug konfiguriert sein. Das Einsatzgebiet kann durch ein Werksgelände einer Fabrik gebildet sein. Die Zonen des Einsatzgebiets können durch Gebäude auf dem Werksgelände und/oder durch Gebäudeabschnitte von Gebäuden auf dem Werksgelände und/oder durch Freiflächen des Werksgeländes und/oder durch Freiflächenabschnitte von Freiflächen des Werksgeländes gebildet sein.

Alternativ dazu kann das Hybridfahrzeug als Flughafen-Logistikfahrzeug konfiguriert sein, wobei das Einsatzgebiet durch ein Flughafengelände eines Flughafens gebildet ist und die Zonen durch Gebäude auf dem Flughafengelände und/oder durch Gebäudeabschnitte von Gebäuden auf dem Flughafengelände und/oder durch Freiflächen des Flughafengeländes und/oder durch Freiflächenabschnitte von Freiflächen des Flughafengeländes gebildet sind.

Alternativ dazu kann das Hybridfahrzeug auch als Baumaschine konfiguriert sein, wobei das Einsatzgebiet durch ein Baustellengelände einer Baustelle gebildet ist und die Zonen durch Gebäude auf dem Baustellengelände und/oder durch Gebäudeabschnitte von Gebäuden auf dem Baustellengelände und/oder durch Freiflächen des Baustellengeländes und/oder durch Freiflächenabschnitte von Freiflächen des Baustellengeländes gebildet sind.

Eine erfindungsgemäße geographische Einheit umfasst ein geographisches Gelände und zumindest ein Hybridfahrzeug der vorstehend beschriebenen Art. Dabei repräsentiert das Gelände ein Einsatzgebiet für das Hybridfahrzeug, das geographisch in mehrere Zonen unterteilt ist, die wenigstens eine Freizone, in der das Hybridfahrzeug im Brennstoffzellenmodus betreibbar ist, und wenigstens eine Sperrzone aufweisen, in der ein Betreiben des Hybridfahrzeugs in Brennstoffzellenmodus unzulässig ist. Üblicherweise kann die Fabrik eine Vielzahl derartiger Hybridfahrzeuge aufweisen, die insbesondere als Intralogistikfahrzeuge konfiguriert sein können.

Gemäß einer vorteilhaften Ausführungsform kann die Einheit mehrere Markierungsstationen aufweisen, die im Einsatzgebiet angeordnet sind und die jeweils zum Senden eines mit einem Standort, an dem sich die jeweilige Markierungsstation innerhalb des Einsatzgebiets befindet, und/oder mit einer Standortinformation, ob sich der Standort in der jeweiligen Freizone oder in der jeweiligen Sperrzone oder auf einer Grenze zwischen der jeweiligen Sperrzone und der jeweiligen Freizone befindet, korrelierenden Standortsignals konfiguriert sind. Des Weiteren kann die Steuereinrichtung des jeweiligen Hybridfahrzeugs eine Empfangseinheit aufweisen oder mit einer Empfangseinheit gekoppelt sein, die zum Empfangen der Standortsignale konfiguriert ist. Die Steuereinrichtung kann nun so konfiguriert sein, dass sie durch Auswerten der Standortsignale ermittelt, wo sich das Hybridfahrzeug innerhalb des Einsatzgebiets befindet und/oder ob sich das Hybridfahrzeug aktuell in der jeweiligen Freizone oder in der jeweiligen Sperrzone befindet, und/oder eine Trajektorie des Hybridfahrzeugs ermittelt, entlang der sich das Hybridfahrzeug im Einsatzgebiet bewegt.

Gemäß einer vorteilhaften Ausführungsform kann die Einheit eine Fabrik sein, wobei das Gelände durch ein Werksgelände gebildet ist.

Gemäß einer alternativen Ausführungsform kann die Einheit ein Flughafen sein, wobei das Gelände durch ein Flughafengelände gebildet ist.

Gemäß einer weiteren alternativen Ausführungsform kann die Einheit eine Baustelle sein, wobei das Gelände durch ein Baustellengelände gebildet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die Ansprüche definierten Rahmen der Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Figur 1: eine stark vereinfachte, schaltplanartige Prinzipdarstellung eines Hybridfahrzeugs,
- Figur 2: eine stark vereinfachte Ansicht einer geographischen Einheit,
- Figur 3: eine Ansicht wie in Figur 2, jedoch bei einer anderen Ausführungsform,
- Figur 4: eine Seitenansicht der Einheit im Bereich einer Markierungsstation,
- Figur 5: ein Flussdiagramm eines Verfahrens zum Betreiben des Hybridfahrzeugs.

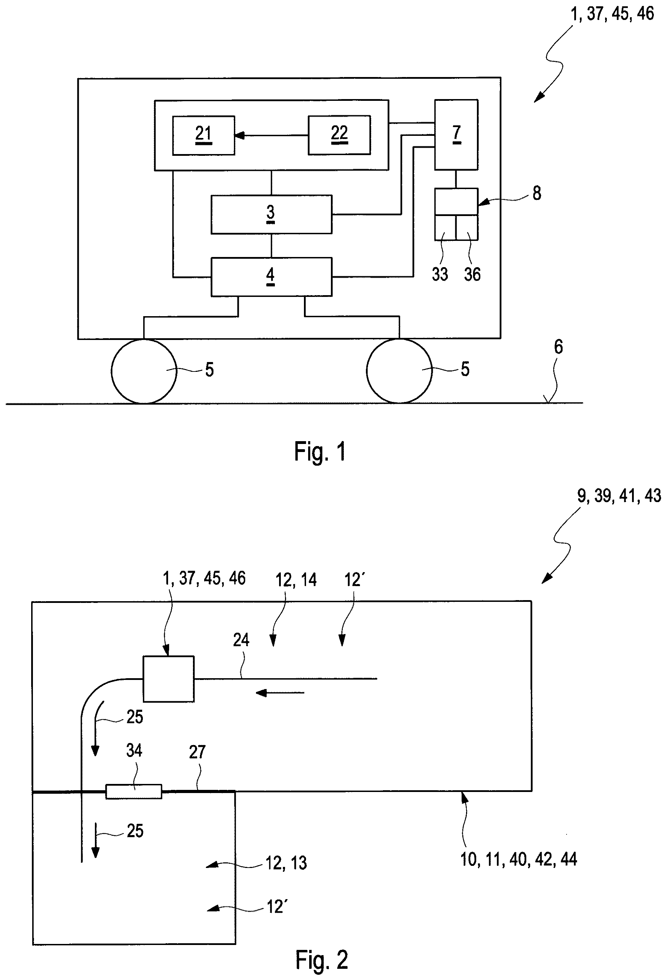

Entsprechend Figur 1 umfasst ein Hybridfahrzeug 1 ein Brennstoffzellensystem 2 zum Erzeugen elektrischer Energie, eine Traktionsbatterie 3 zum Speichern elektrischer Energie sowie einen elektromotorischen Traktionsantrieb 4 zum Antreiben des Hybridfahrzeugs 1. Der Traktionsantrieb 4 kann hierzu auf geeignete Weise mit Rädern 5 des Hybridfahrzeugs 1 gekoppelt sein, mit denen das Hybridfahrzeug 1 auf einem Untergrund 6 steht oder fährt. Das Hybridfahrzeug 1 ist außerdem mit einer Fahrzeugsteuerung 7 ausgestattet, die zum Betreiben des Hybridfahrzeugs 1 konfiguriert ist und dementsprechend auf geeignete Weise mit dem Brennstoffzellensystem 2, mit der Traktionsbatterie 3 und mit dem Traktionsantrieb 4 gekoppelt ist. Es ist klar, dass das Hybridfahrzeug 1 außerdem mit einer hier nicht gezeigten Leistungselektronik gekoppelt ist, die für die Verteilung und Steuerung der elektrischen Energie sorgt. Die Fahrzeugsteuerung 7 ist ferner zum Betreiben des Hybridfahrzeugs 1 in einem Brennstoffzellenmodus und in einen Batteriemodus konfiguriert. Im Brennstoffzellenmodus ist das Brennstoffzellensystem 2 aktiviert, sodass es elektrische Energie zum Versorgen des Traktionsantriebs 4 und/oder zum Versorgen der Traktionsbatterie 3 erzeugt. Im Batteriemodus ist das Brennstoffzellensystem 2 deaktiviert. Im Batteriemodus wird der Traktionsantrieb 4 ausschließlich von der Traktionsbatterie 3 mit elektrischer Energie versorgt. Das Hybridfahrzeug 1 ist außerdem mit einer Steuereinrichtung 8 ausgestattet, die mit der Fahrzeugsteuerung 7 gekoppelt ist.

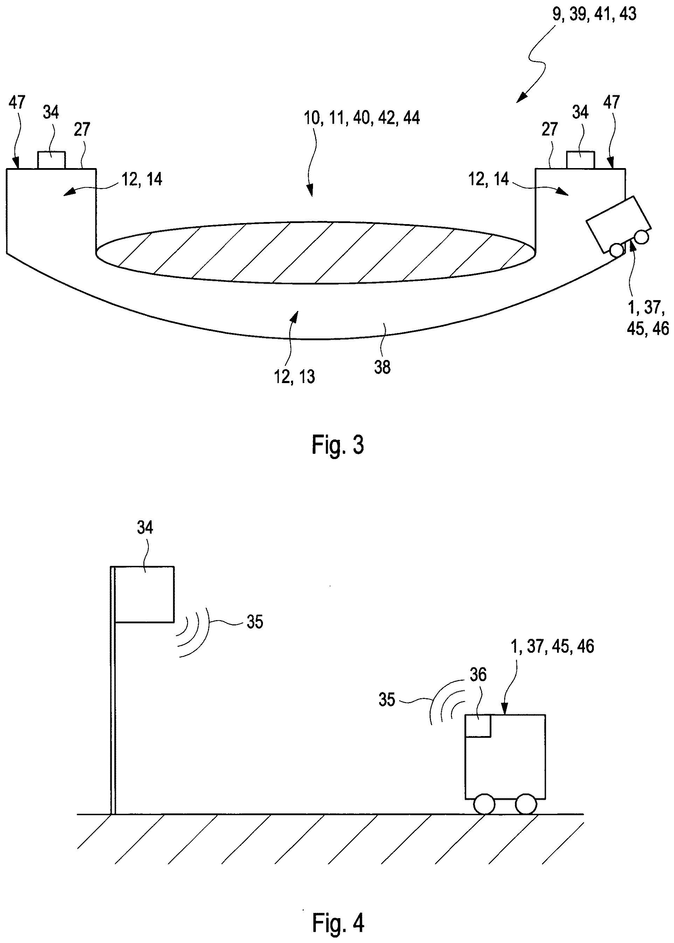

Gemäß den Figuren 2 und 3 umfasst eine geographische Einheit 9 ein geographisches Gelände 10 und zumindest ein Hybridfahrzeug 1. Üblicherweise sind mehrere Hybridfahrzeuge 1 vorgesehen. Das Gelände 10 bildet ein geographisches Einsatzgebiet 11 für das jeweilige Hybridfahrzeug 1. Das jeweilige Hybridfahrzeug 1 ist für einen Betrieb im diesem Einsatzgebiet 11 konfiguriert. Das Einsatzgebiet 11 ist dabei in mehrere Zonen 12 unterteilt, die wenigstens eine Sperrzone 13 und wenigstens eine Freizone 14 bilden. In der jeweiligen Freizone 14 darf das Hybridfahrzeug 1 im Brennstoffzellenmodus betrieben werden. In der jeweiligen Sperrzone 13 ist dagegen ein Betreiben des Hybridfahrzeugs 1 im Brennstoffzellenmodus unzulässig, sodass dort ein Betreiben des Hybridfahrzeugs 1 im Batteriemodus erforderlich ist. Zumindest eine dieser Zonen 12 kann eine variable Zone 12' bilden, die in Abhängigkeit von variierenden Zonenparametern eine Sperrzone 13 oder eine Freizone 14 sein kann. Die Zonenparameter, wie z.B. die aktuelle Luftfeuchtigkeit, die aktuelle Raumtemperatur und der aktuelle Luftdruck, der jeweiligen variablen Zone 12' können mittels einer geeigneten Sensorik permanent überwacht werden. Dadurch ist es möglich, die jeweilige variable Zone 12' dynamisch in Abhängigkeit der aktuellen Zonenparameter als Freizone 14 oder als Sperrzone 13 einzustufen.

Die Einheit 9 kann bevorzugt eine Fabrik 39 sein, wobei das Gelände 10 dann durch ein Werksgelände 40 gebildet ist. Alternativ dazu kann die Einheit 9 ein Flughafen 41 sein, wobei dann das Gelände 10 durch ein Flughafengelände 42 gebildet ist. Ebenso kann die Einheit 9 eine Baustelle 43 sein, wobei dann das Gelände 10 durch ein Baustellengelände 44 gebildet ist.

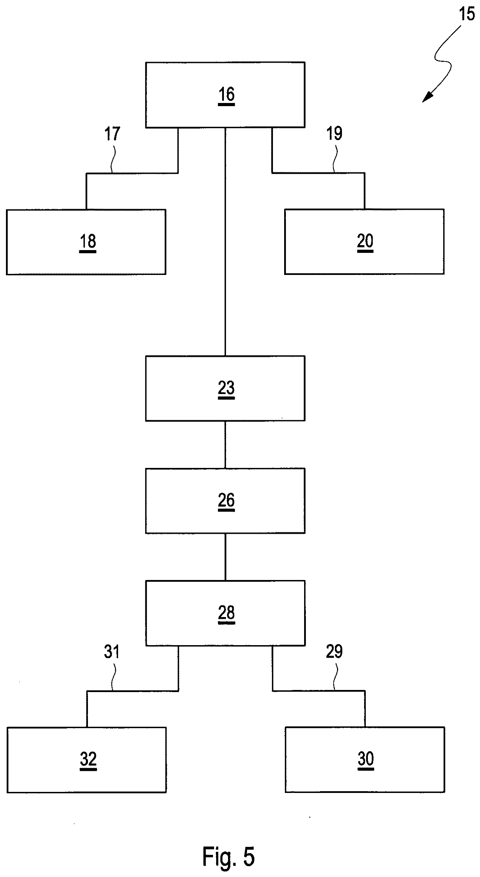

Die Steuereinrichtung 8 ist zur Durchführung eines Verfahrens 15 konfiguriert, das nachfolgend anhand von Figur 5 näher erläutert wird. Gemäß dem Verfahren 15 wird in einem Schritt 16 ermittelt, wo sich das Hybridfahrzeug 1 innerhalb des Einsatzgebiets 11 aktuell befindet und/oder ob sich das Hybridfahrzeug 1 aktuell in einer Freizone 14 oder in einer Sperrzone 13 befindet. An dieser Stelle können insbesondere auch die variablen Zonen 12' berücksichtigt werden, nämlich gemäß ihrem aktuellen Zustand als Freizone 14 oder als Sperrzone 13. Wird in Schritt 16 festgestellt, dass sich das Hybridfahrzeug 1 in einer Freizone 14 befindet, folgt das Verfahren 15 einen Pfad 17 und gelangt zu einem Schritt 18, in dem die Steuereinrichtung 8 die Fahrzeugsteuerung 7 zum Betreiben des Hybridfahrzeugs 1 im Brennstoffzellenmodus ansteuert. Wird in Schritt 16 dagegen festgestellt, dass sich das Hybridfahrzeug 1 in einer Sperrzone 13 befindet, folgt das Verfahren 15 einem Pfad 19 und gelangt zu einem Schritt 20, in dem die Steuereinrichtung 8 die Fahrzeugsteuerung 7 zum Betreiben des Hybridfahrzeugs 1 im Batteriemodus ansteuert.

Gemäß Figur 1 kann das Brennstoffzellensystem 2 in üblicher Weise einen Brennstoffzellenstapel 21 aufweisen, der Anodengas mit Kathodengases in elektrische Energie umsetzt. Das Brennstoffzellensystem 2 weist außerdem eine Anodengaszuführung 22 auf, die zum Versorgen des Brennstoffzellenstapel 21 mit Anodengas konfiguriert ist. Das Aktivieren und Deaktivieren des eingeschalteten Brennstoffzellensystems 2 erfolgt zweckmäßig dadurch, dass die Anodengaszuführung 22 eingeschaltet bzw. ausgeschaltet wird. Anderen Worten, zum Deaktivieren des Brennstoffzellensystems 2 wird für den Batteriebetrieb die Anodengaszuführung 22 ausgeschaltet, sodass dem Brennstoffzellenstapel 21 kein Anodengas mehr zugeführt wird und in der Folge keine elektrische Energie mehr erzeugen kann. Außerdem kann das Brennstoffzellensystem 2 dann auch keine Anodengas enthaltende Abgase mehr erzeugen. Das deaktivierte oder ausgeschaltete Brennstoffzellensystem 2 ist noch warm und lässt sich durch eine relativ kurze Warmstartprozedur wieder in den aktiven Zustand zur Stromerzeugung überführen. Zum Aktivieren des Brennstoffzellensystems 2 wird die Anodengaszuführung 22 eingeschaltet. Das Umschalten zwischen Brennstoffzellenmodus und Batteriemodus lässt sich dadurch vergleichsweise rasch durchführen, jedenfalls rascher als ein vollständiges Starten oder Hochfahren des Brennstoffzellensystems 2 im Rahmen eines Kaltstarts, wozu eine deutlich längere Kaltstartprozedur erforderlich ist.

Gemäß Figur 5 kann entsprechend dem Verfahren 15 in einem Schritt 23 aus der in Schritt 16 durchgeführten Ermittlung des aktuellen Orts des Hybridfahrzeugs 1 innerhalb des Einsatzgebiets 11 auch eine Trajektorie 24 des Hybridfahrzeugs 1 ermittelt werden, entlang der sich das Hybridfahrzeug 1 im Einsatzgebiet 11 bewegt. In Figur 2 ist rein exemplarisch eine derartige Trajektorie 24 eingetragen. Pfeile geben dabei eine Bewegungsrichtung 25 des Hybridfahrzeugs 1 entlang der Trajektorie 24 an. Gemäß Figur 5 kann in einem Schritt 26 anhand der ermittelten Trajektorie 24 vorhergesagt werden, wann das Hybridfahrzeug 1 entlang der Trajektorie 24 eine Grenze 27 erreicht, die sich zwischen einer Sperrzone 13 und einer Freizone 14 befindet. In den Figuren 2 und 3 sind derartige Grenzen 27 markiert. In einem Schritt 28 wird überprüft, ob sich das einer Grenze 27 nähernde Hybridfahrzeug 1 aktuell in einer Freizone 14 oder in einer Sperrzone 13 befindet. Befindet sich das Hybridfahrzeug 1 wie in Figur 2 aktuell in einer Freizone 14 folgt das Verfahren einem Pfad 29 und gelangt zu einem Schritt 30. In Schritt 30 geht die Steuereinrichtung 8 davon aus, dass die Grenze 27, der sich das Hybridfahrzeug 1 nähert, zu einer Sperrzone 13 führt. In Schritt 30 wird dann zeitlich vor dem Erreichen der Grenze 27 eine Umschaltprozedur zum Umschalten vom Brennstoffzellenmodus in den Batteriemodus initiiert, derart, dass die Umschaltprozedur vor dem Erreichen oder beim Erreichen der Grenze 27 abgeschlossen ist. Mit anderen Worten, das Hybridfahrzeug 1 nähert sich innerhalb der Freizone 14 im Brennstoffzellenmodus der Grenze 27 und überfährt die Grenze 27 im Batteriemodus und fährt dementsprechend im Batteriemodus in die Sperrzone 13 ein. In Schritt 30 kann optional außerdem der aktuelle Ladezustand der Traktionsbatterie 3 berücksichtigt werden, und zwar dahingehend, dass überprüft wird, ob der aktuelle Ladezustand für den anstehenden Betrieb des Hybridfahrzeugs 1 in der Sperrzone 13 ausreicht. Hierzu kann anhand eines Bewegungsmodells des Hybridfahrzeugs 1, das aus bisherigen Bewegungsmustern des Hybridfahrzeugs 1 innerhalb des Einsatzgebiets 11 ermittelt bzw. erlernt wird, der erforderliche Energiebedarf des Hybridfahrzeugs 1 abgeschätzt werden. Durch Vergleichen des geschätzten Energiebedarfs mit dem aktuellen Ladezustand der Traktionsbatterie 3 lässt sich einfach ermitteln, ob der aktuelle Ladezustand für den anstehenden Betrieb des Hybridfahrzeugs 1 in der Sperrzone 13 ausreicht oder nicht. Ist der aktuelle Ladezustand zu niedrig, kann vor Erreichen der Grenze 27 und vor der Initiierung der Umschaltprozedur ein Ladevorgang zum Laden der Traktionsbatterie durchgeführt werden, derart, dass ein Ladezustand erreicht wird, der für den geschätzten Energiebedarf ausreicht. Für den Ladevorgang kann das Brennstoffzellensystem 2 vorübergehend mit einer erhöhten Leistung betrieben werden, um elektrische Energie zum Betreiben des Traktionsantriebs 4 und zum Laden der Traktionsbatterie 3 bereitstellen zu können.

Befindet sich dagegen das Hybridfahrzeug 1 in einer Sperrzone 13, folgt das Verfahren nach dem Schritt 29 einem Pfad 31, der zu einem Schritt 32 führt. In Schritt 32 geht die Steuereinrichtung 8 davon aus, dass die Grenze 27, der sich das Hybridfahrzeug 1 nähert, zu einer Freizone 14 führt. In der Folge wird in Schritt 32 zeitlich vor dem Erreichen der Grenze 27 eine Umschaltprozedur zum Umschalten vom Batteriemodus in den Brennstoffzellenmodus initiiert, derart, dass diese Umschaltprozedur nach oder bei Erreichen der Grenze 27 angeschlossen ist. Hierdurch wird erreicht, dass das von der Sperrzone kommende Hybridfahrzeug 1 erst in der Freizone 14 vollständig in den Brennstoffzellenmodus umgeschaltet wird, sodass eine Abgasemission innerhalb der Sperrzone 13 vermieden werden kann.

Auch beim Betrieb des Hybridfahrzeugs 1 im Batteriemodus in einer solchen Sperrzone 13 kann permanent der aktuelle Ladezustand der Traktionsbatterie 3 überprüft werden. Sinkt der Ladezustand unter einen vorbestimmten Grenzwert, kann der Fahrer darauf aufmerksam gemacht werden, so dass er die Sperrzone 13 rechtzeitig verlässt, bevor das Hybridfahrzeug 1 stehen bleibt. Bei einem autonom fahrenden Hybridfahrzeug 1 kann ein Herausfahren des Hybridfahrzeugs 1 aus der Sperrzone 13 automatisch erfolgen. In einer benachbarten Freizone 14 kann durch den Brennstoffzellenmodus die Traktionsbatterie 3 wieder geladen werden.

Das in Schritt 16 durchgeführte Ermitteln, wo sich das Hybridfahrzeug 1 innerhalb des Einsatzgebiets 11 befindet und/oder ob sich das Hybridfahrzeug 1 aktuell in einer Freizone 14 oder in einer Sperrzone 13 befindet, und/oder das Ermitteln der Trajektorie 24 kann dadurch erfolgen, dass ein geographischer Ort des Hybridfahrzeugs ermittelt und mit geographischen Daten des Einsatzgebiets 11 verglichen wird. Hierbei können auch die weiter oben genannten Zonenparameter berücksichtigt werden, um den aktuellen Zustand der variablen Zonen 12' zu ermitteln, so dass diese je nach Zustand als Sperrzone 13 oder als Freizone 14 berücksichtigt werden können. Beispielsweise kann die Steuereinrichtung 8 hierzu mit einer satellitengestützten Navigationseinrichtung 33 ausgestattet sein. In Figur 1 ist die Navigationseinrichtung 33 in die Steuereinrichtung 8 integriert. Grundsätzlich kann eine derartige Navigationseinrichtung 33 auch bezüglich der Steuereinrichtung 8 separat vorgesehen sein, wobei dann die Steuereinrichtung 8 auf geeignete Weise mit der Navigationseinrichtung 33 gekoppelt ist. Mithilfe der Navigationseinrichtung 33 lässt sich der geographische Ort des Hybridfahrzeugs 1 ermitteln. Durch Vergleichen oder Abgleichen des ermittelten geographischen Orts mit geographischen Daten des Einsatzgebiets 11 lässt sich die aktuelle Position des Hybridfahrzeugs 1 im Einsatzgebiet 11 ermitteln. Ferner lässt sich dadurch ermitteln, ob sich das Hybridfahrzeug 1 aktuell in einer Sperrzone 13 oder in einer Freizone 14 befindet. Des Weiteren lässt sich hierdurch die Trajektorie 24 ermitteln. Das Vergleichen mit den geographischen Daten des Einsatzgebiets 11 kann dabei anhand einer geographischen Karte durchgeführt werden, die das Einsatzgebiet 11 repräsentiert. Diese Karte kann dabei in der Steuereinrichtung 8 abgelegt sein oder in einem Speicher abgelegt sein, auf den die Steuereinrichtung 8 Zugriff hat. Der Speicher kann dabei in Hybridfahrzeug 1 oder in einem Backendserver gespeichert sein, auf den die Steuereinrichtung 8 Zugriff hat.

Gemäß den Figuren 2 und 3 kann die Einheit 9 mit mehreren Markierungsstationen 34 ausgestattet sein, die im Einsatzgebiet 11, also auf dem Gelände 10 verteilt angeordnet sind. Gemäß Figur 4 kann die jeweilige Markierungsstation 34 zum Senden eines Standortsignals 35 konfiguriert sein, das mit einem Standort und/oder mit einer Standortinformation korreliert. Mit anderen Worten, das Standortsignal 35 transportiert Daten, die den Standort bzw. die Standortinformation beinhalten. Beim Standort handelt es sich um den Ort, an dem sich die jeweilige Markierungsstation 34 innerhalb des Einsatzgebiets 11 befindet. Die Standortinformation enthält eine Information darüber, ob sich der Standort der jeweiligen Markierungsstation 34 in einer Freizone 14 oder in einer Sperrzone 13 befindet oder auf einer Grenze 27 zwischen einer Sperrzone 13 und einer Freizone 14 befindet.

Gemäß Figur 1 kann die Steuereinrichtung 8 eine Empfangseinheit 36 aufweisen. Im Beispiel der Figur 1 ist die Empfangseinheit 36 in die Steuereinrichtung 8 integriert. Bei einer anderen Ausführungsform kann die Empfangseinheit 36 auch bezüglich der Steuereinrichtung 8 separat ausgestaltet sein. In diesem Fall ist die Steuereinrichtung 8 mit der Empfangseinheit 36 auf geeignete Weise gekoppelt. In Figur 4 ist eine derartige separate Empfangseinheit 36 angedeutet. Die Empfangseinheit 36 ist zum Empfangen von den Standortsignalen 35 konfiguriert. Die Steuereinrichtung 8 kann nun außerdem so konfiguriert sein, dass sie durch Auswerten der Standortsignale ermittelt, wo sich das Hybridfahrzeug 1 innerhalb des Einsatzgebiets 11 befindet, und/oder ob sich das Hybridfahrzeug 1 aktuell in einer Sperrzone 13 oder in einer Freizone 14 befindet. Außerdem kann die Steuereinrichtung 8 durch Auswerten der Standortsignale die Trajektorie 24 des Hybridfahrzeugs 1 ermitteln.

Insbesondere für den Fall, dass die Einheit 9 durch eine Fabrik 39 gebildet ist, handelt es sich beim Hybridfahrzeug 1 bevorzugt um ein Intralogistikfahrzeug 37, bei dem es sich beispielsweise um einen Gabelstapler handeln kann. Die Zonen 12 können innerhalb des Werksgeländes 40, das hier das Einsatzgebiet 11 des Hybridfahrzeugs 1 bzw. des Intralogistikfahrzeugs 37 repräsentiert, durch Gebäude gebildet sein, die sich auf dem Werksgelände 40 befinden, oder durch Gebäudeabschnitte gebildet sein. Ebenso können Freiflächen oder Abschnitte von Freiflächen des Werksgeländes 40 derartige Zonen 12 bilden. Für den Fall, dass die Einheit 9 durch einen Flughafen 41 gebildet ist, kann es sich beim Hybridfahrzeug 1 bevorzugt um ein Flughafen-Logistikfahrzeug 45 handeln, z.B. ein Gepäckwagenzugfahrzeug. Die Zonen 12 können innerhalb des Flughafengeländes 42, das hier das Einsatzgebiet 11 des Hybridfahrzeugs 1 bzw. des Flughafen-Logistikfahrzeugs 45 repräsentiert, durch Gebäude gebildet sein, die sich auf dem Flughafengelände 42 befinden, oder durch Gebäudeabschnitte gebildet sein. Ebenso können Freiflächen oder Abschnitte von Freiflächen des Flughafengeländes 42 derartige Zonen 12 bilden. Für den Fall, dass die Einheit 9 durch eine Baustelle 43 gebildet ist, kann es sich beim Hybridfahrzeug 1 bevorzugt um eine Baumaschine 46 handeln, z.B. ein Bagger. Die Zonen 12 können innerhalb des Baustellengeländes 44, das hier das Einsatzgebiet 11 des Hybridfahrzeugs 1 bzw. der Baumaschine 46 repräsentiert, durch Gebäude gebildet sein, die sich auf dem Baustellengelände 44 befinden, oder durch Gebäudeabschnitte gebildet sein. Ebenso können Freiflächen oder Abschnitte von Freiflächen des Baustellengeländes 44 derartige Zonen 12 bilden.

Im Beispiel der Figur 4 ist ein Bereich des Geländes 10 bzw. des Einsatzgebiets 11 gezeigt, in dem zwei Freizonen 14 durch eine Sperrzone 13 miteinander verbunden sind. Beispielsweise kann die Sperrzone 13 hier durch einen Tunnel 38 gebildet sein. Die jeweilige Grenze 27 ist dabei jeweils durch ein Tor 47 gebildet, das die Sperrzone 13 bzw. den Tunnel 38 von der jeweiligen Freizone 14 trennt.

### Bezugszeichenliste

- 1: Hybridfahrzeug
- 2: Brennstoffzellensystem
- 3: Traktionsbatterie
- 4: Traktionsantrieb
- 5: Rad
- 6: Untergrund
- 7: Fahrzeugsteuerung
- 8: Steuereinrichtung
- 9: geographische Einheit
- 10: geographisches Gelände
- 11: Einsatzgebiet
- 12: Zone
- 13: Sperrzone
- 14: Freizone
- 15: Verfahren
- 16: Schritt
- 17: Pfad
- 18: Schritt
- 19: Pfad
- 20: Schritt
- 21: Brennstoffzellenstapel
- 22: Anodengaszuführung
- 23: Schritt
- 24: Trajektorie
- 25: Bewegungsrichtung
- 26: Schritt
- 27: Grenze
- 28: Schritt
- 29: Pfad
- 30: Schritt
- 31: Pfad
- 32: Schritt
- 33: Navigationseinrichtung
- 34: Markierungsstation
- 35: Standortsignal
- 36: Empfangseinheit
- 37: Intralogistikfahrzeug
- 38: Tunnel
- 39: Fabrik
- 40: Werksgelände
- 41: Flughafen
- 42: Flughafengelände
- 43: Baustelle
- 44: Baustellengelände
- 45: Flughafen-Logistikfahrzeug
- 46: Baumaschine
- 47: Tor

## Patentansprüche

1. Verfahren (15) zum Betreiben eines Hybridfahrzeugs (1),
- wobei das Hybridfahrzeug (1) ein Brennstoffzellensystem (2) zum Erzeugen elektrischer Energie, eine Traktionsbatterie (3) zum Speichern elektrischer Energie, einen elektromotorischen Traktionsantrieb (4) zum Antreiben des Hybridfahrzeugs (1) und eine Fahrzeugsteuerung (7) aufweist, die zum Betreiben des Hybridfahrzeugs (1) in einem Brennstoffzellenmodus, in dem das Brennstoffzellensystem (2) aktiviert ist und elektrische Energie zum Versorgen des Traktionsantriebs (4) und/oder zum Versorgen der Traktionsbatterie (3) erzeugt, und in einem Batteriemodus konfiguriert ist, in dem das Brennstoffzellensystem (2) deaktiviert ist und der Traktionsantrieb (4) von der Traktionsbatterie (3) mit elektrischer Energie versorgt wird,
- wobei das Hybridfahrzeug (1) zum Betreiben in einem vorbestimmten geographischen Einsatzgebiet (11) konfiguriert ist, das geographisch in mehrere Zonen (12) unterteilt ist, die wenigstens eine Freizone (14), in der das Hybridfahrzeug (1) im Brennstoffzellenmodus betreibbar ist, und wenigstens eine Sperrzone (13) aufweisen, in der ein Betreiben des Hybridfahrzeugs (1) im Brennstoffzellenmodus unzulässig ist,
- bei dem ermittelt wird, wo sich das Hybridfahrzeug (1) innerhalb des Einsatzgebiets (11) befindet und/oder ob sich das Hybridfahrzeug (1) aktuell in der jeweiligen Freizone (14) oder in der jeweiligen Sperrzone (13) befindet,
- bei dem das Hybridfahrzeug (1), wenn es sich in der jeweiligen Freizone (14) befindet, im Brennstoffzellenmodus betrieben wird, und, wenn es sich in der jeweiligen Sperrzone (13) befindet, im Batteriemodus betrieben wird.

2. Verfahren (15) nach Anspruch 1,
**dadurch gekennzeichnet,**
- **dass** das Brennstoffzellensystem (2) einen Brennstoffzellenstapel (21) und eine Anodengaszuführung (22) zum Versorgen des Brennstoffzellenstapels (21) mit Anodengas aufweist,
- **dass** zum Deaktivieren des Brennstoffzellensystems (2) die Anodengaszuführung (22) ausgeschaltet wird,
- **dass** zum Aktivieren des Brennstoffzellensystems (2) die Anodengaszuführung (22) eingeschaltet wird.

3. Verfahren (15) nach Anspruch 1 oder 2,
**dadurch gekennzeichnet,**
- **dass** eine Trajektorie (24) des Hybridfahrzeugs (1) ermittelt wird, entlang der sich das Hybridfahrzeug (1) im Einsatzgebiet (11) bewegt,
- **dass** anhand der Trajektorie (24) vorausgesagt wird, wann das Hybridfahrzeug (1) entlang der Trajektorie (24) eine Grenze (27) zwischen der jeweiligen Freizone (14) und der jeweiligen Sperrzone (13) erreichen wird,
- **dass** zeitlich vor dem Erreichen der Grenze (27) eine Umschaltprozedur zum Umschalten vom Brennstoffzellenmodus in den Batteriemodus initiiert wird, wenn sich das Hybridfahrzeug (1) in der jeweiligen Freizone (14) befindet und der jeweiligen Sperrzone (13) nähert, so dass die Umschaltprozedur vor oder bei Erreichen der Grenze (27) abgeschlossen ist.

4. Verfahren (15) nach Anspruch 3,
**dadurch gekennzeichnet,**
- **dass** zeitlich vor dem Erreichen der Grenze (27) ein Energiebedarf des Traktionsantriebs (4) für einen erwarteten Betrieb des Hybridfahrzeugs (1) in der jeweiligen Sperrzone (13) vorausgesagt und mit einem aktuellen Ladezustand der Traktionsbatterie (3) verglichen wird,
- **dass** zeitlich vor dem Initiieren der Umschaltprozedur ein Ladevorgang der Traktionsbatterie (3) durchgeführt wird, wenn der geschätzte Energiebedarf größer ist als der aktuelle Ladezustand.

5. Verfahren (15) nach Anspruch 3 oder 4,
**dadurch gekennzeichnet,**
- **dass** zeitlich vor dem Erreichen der Grenze (27) eine Umschaltprozedur zum Umschalten vom Batteriemodus in den Brennstoffzellenmodus initiiert wird, wenn sich das Hybridfahrzeug (1) in der jeweiligen Sperrzone (13) befindet und der jeweiligen Freizone (14) nähert, so dass die Umschaltprozedur nach oder bei Erreichen der Grenze (27) abgeschlossen ist.

6. Verfahren (15) nach einem der vorhergehenden Ansprüche,
**dadurch gekennzeichnet,**
- **dass** das Ermitteln, wo sich das Hybridfahrzeug (1) innerhalb des Einsatzgebiets (11) befindet und/oder ob sich das Hybridfahrzeug (1) aktuell in der jeweiligen Freizone (14) oder in der jeweiligen Sperrzone (13) befindet, und/oder das Ermitteln einer Trajektorie (24) des Hybridfahrzeugs (1), entlang der sich das Hybridfahrzeug (1) im Einsatzgebiet (11) bewegt, dadurch erfolgt, dass ein geographischer Ort des Hybridfahrzeugs (1) ermittelt und mit geographischen Daten des Einsatzgebiets (11) verglichen wird.

7. Verfahren (15) nach Anspruch 6,
**dadurch gekennzeichnet,**
- **dass** das Ermitteln des geographischen Orts des Hybridfahrzeugs (1) mittels einer satellitengestützten Navigationseinrichtung (33) durchgeführt wird, und/oder
- **dass** das Vergleichen des ermittelten geographischen Orts des Hybridfahrzeugs (1) mit den geographischen Daten des Einsatzgebiets (11) anhand einer das Einsatzgebiet (11) repräsentierenden geographischen Karte durchgeführt wird.

8. Verfahren (15) nach einem der vorhergehenden Ansprüche,
**dadurch gekennzeichnet,**
- **dass** die Zonen (12) des Einsatzgebiets (11) mindestens eine variable Zone (12') aufweisen, die in Abhängigkeit von variierenden Zonenparametern eine der wenigstens einen Sperrzone (13) oder eine der wenigstens einen Freizone (14) bilden kann,
- **dass** die Zonenparameter der jeweiligen variablen Zone (12') überwacht werden und die jeweilige variable Zone (12') dynamisch in Abhängigkeit der aktuellen Zonenparameter als Freizone (14) oder als Sperrzone (13) eingestuft wird,
- **dass** beim Ermitteln, ob sich das Hybridfahrzeug (1) aktuell in der jeweiligen Freizone (14) oder in der jeweiligen Sperrzone (13) befindet, die jeweilige variable Zone (12') und deren aktuelle Einstufung als Freizone (14) oder Sperrzone (13) berücksichtigt wird.

9. Verfahren (15) nach einem der vorhergehenden Ansprüche,
**dadurch gekennzeichnet,**
- **dass** das Ermitteln, wo sich das Hybridfahrzeug (1) innerhalb des Einsatzgebiets (11) befindet und/oder ob sich das Hybridfahrzeug (1) aktuell in der jeweiligen Freizone (14) oder in der jeweiligen Sperrzone (13) befindet, und/oder das Ermitteln einer Trajektorie (24) des Hybridfahrzeugs (1), entlang der sich das Hybridfahrzeug (1) im Einsatzgebiet (11) bewegt, dadurch erfolgt, dass im Einsatzgebiet (11) mehrere Markierungsstationen (34) angeordnet sind, die jeweils zum Senden eines mit einem Standort, an dem sich die jeweilige Markierungsstation (34) innerhalb des Einsatzgebiets (11) befindet, und/oder mit einer Standortinformation, ob sich der Standort in der jeweiligen Freizone (14) oder in der jeweiligen Sperrzone (13) oder auf einer Grenze (27) zwischen der jeweiligen Freizone (14) und der jeweiligen Sperrzone (13) befindet, korrelierenden Standortsignals (35) konfiguriert sind, und dass die Standortsignale (35) empfangen und ausgewertet werden.

10. Verfahren (15) nach einem der vorhergehenden Ansprüche,
**dadurch gekennzeichnet,**
- **dass** das Hybridfahrzeug (1) als Intralogistikfahrzeug (37) konfiguriert ist,
- **dass** das Einsatzgebiet (11) durch ein Werksgelände (40) einer Fabrik (39) gebildet ist,
- **dass** die Zonen (12) durch Gebäude auf dem Werksgelände (40) und/oder durch Gebäudeabschnitte von Gebäuden auf dem Werksgelände (40) und/oder durch Freiflächen des Werksgeländes (40) und/oder durch Freiflächenabschnitte von Freiflächen des Werksgeländes (40) gebildet sind.

11. Verfahren (15) nach einem der Ansprüche 1 bis 9,
**dadurch gekennzeichnet,**
- **dass** das Hybridfahrzeug (1) als Flughafen-Logistikfahrzeug (45) konfiguriert ist,
- **dass** das Einsatzgebiet (11) durch ein Flughafengelände (42) eines Flughafens (41) gebildet ist,
- **dass** die Zonen (12) durch Gebäude auf dem Flughafengelände (42) und/oder durch Gebäudeabschnitte von Gebäuden auf dem Flughafengelände (42) und/oder durch Freiflächen des Flughafengeländes (42) und/oder durch Freiflächenabschnitte von Freiflächen des Flughafengeländes (42) gebildet sind.

12. Verfahren (15) nach einem der Ansprüche 1 bis 9,
**dadurch gekennzeichnet,**
- **dass** das Hybridfahrzeug (1) als Baumaschine (46) konfiguriert ist,
- **dass** das Einsatzgebiet (11) durch ein Baustellengelände (44) einer Baustelle (43) gebildet ist,
- **dass** die Zonen (12) durch Gebäude auf dem Baustellengelände (44) und/oder durch Gebäudeabschnitte von Gebäuden auf dem Baustellengelände (44) und/oder durch Freiflächen des Baustellengeländes (44) und/oder durch Freiflächenabschnitte von Freiflächen des Baustellengeländes (44) gebildet sind.

13. Steuereinrichtung (8) zum Betreiben eines Hybridfahrzeugs (1),
- wobei das Hybridfahrzeug (1) ein Brennstoffzellensystem (2) zum Erzeugen elektrischer Energie, eine Traktionsbatterie (3) zum Speichern elektrischer Energie, einen elektromotorischen Traktionsantrieb (4) zum Antreiben des Hybridfahrzeugs (1) und eine Fahrzeugsteuerung (7) aufweist, die zum Betreiben des Hybridfahrzeugs (1) in einem Brennstoffzellenmodus, in dem das Brennstoffzellensystem (2) aktiviert ist und elektrische Energie zum Versorgen des Traktionsantriebs (4) und/oder zum Versorgen der Traktionsbatterie (3) erzeugt, und in einem Batteriemodus konfiguriert ist, in dem das Brennstoffzellensystem (2) deaktiviert ist und der Traktionsantrieb (4) von der Traktionsbatterie (3) mit elektrischer Energie versorgt wird,
- wobei das Hybridfahrzeug (1) zum Betreiben in einem vorbestimmten geographischen Einsatzgebiet (11) konfiguriert ist,
- wobei das Einsatzgebiet (11) geographisch in mehrere Zonen (12) unterteilt ist, die wenigstens eine Freizone (14), in der das Hybridfahrzeug (1) im Brennstoffzellenmodus betreibbar ist, und wenigstens eine Sperrzone (13) aufweisen, in der ein Betreiben des Hybridfahrzeugs (1) im Brennstoffzellenmodus unzulässig ist,
- wobei die Steuereinrichtung (8) zum Koppeln mit der Fahrzeugsteuerung (7) und zum Durchführen des Verfahrens (15) nach einem der vorhergehenden Ansprüche konfiguriert ist.

14. Hybridfahrzeug (1),
- mit einem Brennstoffzellensystem (2) zum Erzeugen elektrischer Energie,
- mit einer Traktionsbatterie (3) zum Speichern elektrischer Energie,
- mit einem elektromotorischen Traktionsantrieb (4) zum Antreiben des Hybridfahrzeugs (1), und
- mit einer Fahrzeugsteuerung (7), die zum Betreiben des Hybridfahrzeugs (1) in einem Brennstoffzellenmodus, in dem das Brennstoffzellensystem (2) aktiviert ist und elektrische Energie zum Versorgen des Traktionsantriebs (4) und/oder zum Versorgen der Traktionsbatterie (3) erzeugt, und in einem Batteriemodus konfiguriert ist, in dem das Brennstoffzellensystem (2) deaktiviert ist und der Traktionsantrieb (4) von der Traktionsbatterie (3) mit elektrischer Energie versorgt wird,
- wobei das Hybridfahrzeug (1) zum Betreiben in einem vorbestimmten geographischen Einsatzgebiet (11) konfiguriert ist, das geographisch in mehrere Zonen (12) unterteilt ist, die wenigstens eine Freizone (14), in der das Hybridfahrzeug (1) im Brennstoffzellenmodus betreibbar ist, und wenigstens eine Sperrzone (13) aufweisen, in der ein Betreiben des Hybridfahrzeugs (1) im Brennstoffzellenmodus unzulässig ist,
- wobei das Hybridfahrzeug (1) außerdem eine mit der Fahrzeugsteuerung (7) gekoppelte Steuereinrichtung (8) nach Anspruch 13 aufweist.

15. Geographische Einheit (9),
- mit einem geographischen Gelände (10),
- mit mindestens einem Hybridfahrzeug (1) nach Anspruch 14,
- wobei das Gelände (10) ein geographisches Einsatzgebiet (11) für das jeweilige Hybridfahrzeug (1) repräsentiert, das geographisch in mehrere Zonen (12) unterteilt ist, die wenigstens eine Freizone (14), in der das Hybridfahrzeug (1) im Brennstoffzellenmodus betreibbar ist, und wenigstens eine Sperrzone (13) aufweisen, in der ein Betreiben des Hybridfahrzeugs (1) im Brennstoffzellenmodus unzulässig ist.
